# EUROPÄISCHE PATENTSCHRIFT

(11) **EP 2 904 677 B1**
(45) Veröffentlichungstag und Bekanntmachung des Hinweises auf die Patenterteilung: **06.02.2019**
(21) Anmeldenummer: 13766042.9
(22) Anmeldetag: 20.09.2013
(51) Int. Cl.: H02H 7/122, H02H 7/20

(54) **SCHALTUNGSANORDNUNG MIT EINEM WECHSELRICHTER**
CIRCUIT CONFIGURATION WITH AN INVERTER
CIRCUITERIE COMPRENANT UN ONDULEUR

(30) Priorität: 01.10.2012 DE 102012217884
(43) Veröffentlichungstag der Anmeldung: 12.08.2015
(73) Patentinhaber: SMA Solar Technology AG, 34266 Niestetal (DE)
(72) Erfinder: WELLER, Andreas, 71254 Ditzingen (DE); KRAUTER, Gisbert, 71737 Kirchberg (DE); EISENHARDT, Harald, 71277 Rutesheim (DE); ZEBA, Niko, 75181 Pforzheim (DE)
(74) Vertreter: Lahnor, Peter
(86) Internationale Anmeldenummer: PCT/EP2013/069610
(87) Internationale Veröffentlichungsnummer: WO 2014/053339

(56) Entgegenhaltungen:
- EP-A2- 2 511 956
- DE-A1-102008 050 543
- DE-A1-102010 055 550
- US-A1- 2012 050 924

## Beschreibung

Die Erfindung betrifft eine Schaltungsanordnung mit einem Wechselrichter und ein Verfahren zum Betreiben einer solchen Schaltungsanordnung.

### Stand der Technik

Wechselrichter sind elektrische Geräte, die eine Gleichspannung in eine Wechselspannung umrichten und bspw. in Photovoltaikanlagen zum Wandeln des photovoltaisch erzeugten Stroms dienen. Üblicherweise werden Wechselrichter mit Gleichstromgeneratoren verbunden, um die mit dem Generator erzeugte Gleichspannung zu wandeln.

Bei Wechselrichtern ist es unumgänglich, diese im Wartungsfall von dem Generator bzw. der Photovoltaikanlage zu trennen. Hierzu werden Trennschalter normativ gefordert. Integrierte Lösungen hierfür sind bekannt. So beschreibt die Druckschrift EP 2 048 679 B1 eine Lasttrenner-Anordnung zum An- und Abschalten eines Gleichstroms, die in einer Photovoltaikanlage zur Anwendung kommt. Das Abschalten erfolgt automatisch im Falle eines Fehlers. Hierzu wird eine elektronische Steuereinheit eingesetzt, die Signale empfängt und bei Erkennen eines Fehlers das Abschalten bewirkt.

Bei bekannten Ausführungen wird ein Gleichspannungstrennschalter manuell betätigt. Bei einigen Schaltertypen ist es zudem möglich, den Schalter durch Wegnahme einer Haltespannung auszulösen, was allerdings einen Wartungseingriff zum erneuten Einschalten von Hand erforderlich macht. Weiterhin sind Lösungen mit integrierten Trennschaltern bekannt.

Es ist dadurch jedoch nicht möglich, dass der Wechselrichter selbsttätig den Gleichspannungstrennschalter ansteuern kann, was im Falle eines Wechselrichterfehlers oder eines Fehlers im Generator die Systemsicherheit erhöhen würde.
Darüber hinaus benötigt eine mechanische Betätigung eine ausreichende Stabilität und Zugänglichkeit, was eine Positionierung des Schalters an aus elektrischer Sicht am besten geeigneter Stelle im Wechselrichter verhindern kann und zusätzlichen Verdrahtungsaufwand im Wechselrichter notwendig macht.

Die DE 10 2010 055 550 A1 (Präambel nach diesem Dokument) zeigt einen Wechselrichter, der über eine Brückenschaltung, eine Fehlerstrommesseinrichtung und drei DC-Schalter mit einem String verbunden ist. Eine mit der Fehlerstrommesseinrichtung verbundene Steuereinrichtung des Wechselrichters ist ausgebildet, um die DC-Schalter derart anzusteuern, dass im Erdschlussfall ein vollständiges Trennen der Verbindung des Strings mit der Brückenschaltung und eine Vereinzelung des Strings in potenzialbezugslose Teilstrings erfolgt.
Aus der US 2012/0050924 A1 ist ein Wechselrichter bekannt, dessen Pole über je einen durch eine Steuereinrichtung des Wechselrichters steuerbaren Schalter mit mehreren Strings verbunden sind. An einen jeweiligen Eingang der Schalter ist eine mit der Steuereinrichtung verbundene Messeinrichtung angeschlossen.
In der DE 10 2008 050 543 A1 ist ein Wechselrichter offenbart, der über einen durch den Wechselrichter steuerbaren Schalter mit einem String verbunden ist.
Die EP 2 511 956 A2 beschreibt eine Fotovoltaikanlage mit mehreren parallel geschalteten Strings, deren Minus- und Pluspol über je einen Schalter mit einem Wechselrichter verbunden sind. Eine Steuervorrichtung der Fotovoltaikanlage ist ausgebildet, um die Schalter in Abhängigkeit von vorgegebenen Spannungsgrenzwerten anzusteuern.

### Offenbarung der Erfindung

Vor diesem Hintergrund werden eine Schaltungsanordnung mit den Merkmalen des Anspruchs 1 und ein Verfahren nach Anspruch 7 vorgestellt. Ausführungen ergeben sich aus den abhängigen Ansprüchen und der Beschreibung.

Das vorgestellte Verfahren verbessert den Einsatz eines Wechselrichters, insbesondere eines Photovoltaik-Wechselrichters. Hierzu wird insbesondere die Verwendung mindestens eines Schalters des Photovoltaik-Wechselrichters vorgeschlagen. Dies erfolgt ggf. unterstützt durch einen elektronischen Lasttrennschalter zum Trennen des Eingangsstromkreises des Wechselrichters im Wartungsfall, damit die Generatorzuleitungen ohne Gefahr einer Lichtbogenbildung vom Wechselrichter getrennt werden können.
Es werden somit eine Schaltungsanordnung und ein Verfahren vorgestellt, um zusätzlich zum für den Wartungsfall geforderten Trennschalter die Betriebssicherheit und Verfügbarkeit zu erhöhen, da ein fehlerhafter Generator vom Wechselrichter selbsttätig abgekoppelt wird und ein Zuschalten nur nach Prüfung der Fehlerfreiheit des Generators erfolgt. Insbesondere im Installationsfall kann dadurch verhindert werden, dass ein falsch angeschlossener Generator auf den Wechselrichter geschaltet und dadurch kurzgeschlossen wird. Außerdem kann in einem Fehlerfall des Wechselrichters der Generator abgekoppelt werden. Weiterhin kann unmittelbar vor der Lasttrennung der Eingangsstrom, soweit dies möglich ist, auf einen kleinen Wert zurückgeregelt werden, um die Beanspruchung des Lasttrennschalters zu minimieren.

Darüber hinaus ist es möglich, auf die redundante Ausführung des netzseitigen Koppelschalters zu verzichten. Der notwendige manuell betätigte Serviceschalter wird dadurch nur noch als Signalschalter ausgeführt, was diesen deutlich günstiger macht und die mechanische Integration vereinfacht.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

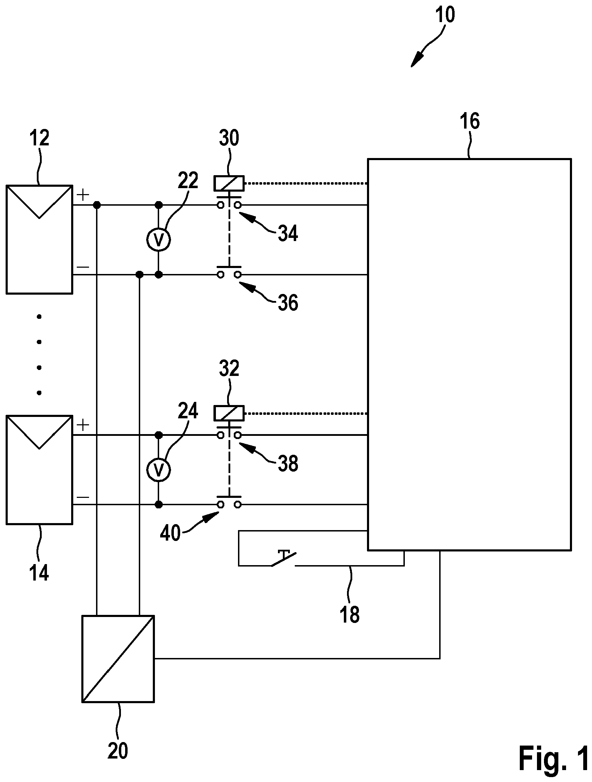

Kurze Beschreibung der Zeichnung
- Figur 1: zeigt in einer schematischen Darstellung eine Ausführung der vorgestellten Schaltungsanordnung.

### Ausführungsform der Erfindung

Die Erfindung ist anhand von einer Ausführungsform in der Zeichnung schematisch dargestellt und wird nachfolgend unter Bezugnahme auf die Zeichnung ausführlich beschrieben.

Figur 1 zeigt eine Ausführung der beschriebenen Schaltungsanordnung, die insgesamt mit der Bezugsziffer 10 bezeichnet ist. Die Darstellung zeigt einen ersten String 12, einen zweiten String 14, die jeweils zwei Pole, plus und minus, aufweisen, einen Wechselrichter 16, einen externen Trennschalter 18 für Wartungsarbeiten und einen Gleichspannungswandler 20. In dem ersten String 12 ist eine erste Messeinrichtung 22 vorgesehen. Entsprechend ist in dem zweiten String 14 eine zweite Messeinrichtung 24 angeordnet. Die Messeinrichtungen 22 und 24 sind in diesem Fall als Voltmeter ausgebildet und messen jeweils eine Spannung zwischen den Polen des betreffenden Strings 12 bzw. 14.

Weiterhin ist in dem ersten String 12 eine erste Betätigungseinrichtung 30 und in dem zweiten String 14 eine zweite Betätigungseinrichtung 32 vorgesehen. Die beiden Betätigungseinrichtungen 30 und 32 werden vom Wechselrichter 16 aus angesteuert, wobei ggf. neben anderen Größen die von den Messeinrichtungen 22 und 24 ermittelten Größen berücksichtigt werden.

Der ersten Betätigungseinrichtung 30 ist ein erster Schalter 34 für den Pluspol des ersten Strings 12 und ein zweiter Schalter 36 für den Minuspol des ersten Strings 12 zugeordnet. Entsprechend ist der zweiten Betätigungseinrichtung 32 ein dritter Schalter 38 für den Pluspol des zweiten Strings 14 und ein vierter Schalter 40 für den Minuspol des zweiten Strings 14 zugeordnet.

Mit der ersten Betätigungseinrichtung 30 ist es somit, angesteuert von dem Wechselrichter 16, möglich, den ersten 34 und zweiten Schalter 36 zu schließen und zu öffnen. Dabei können diese bei einer Ausführung getrennt voneinander geöffnet und geschlossen werden. In einer alternativen Ausführung werden die beiden Schalter 34 und 36 gemeinsam betätigt und damit gemeinsam geöffnet oder geschlossen. Ebenso können mit der zweiten Betätigungseinrichtung 32 der dritte 38 und vierte Schalter 40 gemeinsam oder getrennt voneinander betätigt werden.

Unter einem String ist dabei ein Teilgenerator bzw. eine Modulkette eines Solarmoduls zu verstehen. Ein Solarmodul bzw. Photovoltaikmodul wiederum ist ein Verbund einer Anzahl von Solarzellen zu einer mechanischen und elektrischen Einheit.

Die dargestellte Schaltungsanordnung umfasst jeweils einen steuerbaren Schalter 34, 36, 38, 40 für jeden Pol des Wechselrichters 16, die praktischerweise paarweise in einem Bauteil mit einer Betätigungseinrichtung 30 bzw. 32 zusammengefasst sind, das auf einer Leiterplatte montiert ist, bspw. als ein zweipoliges Relais. So kann jeder Generatoreingang mit der Eingangsstufe des Wechselrichters 16 verbunden oder potentialgetrennt werden, wobei gleichzeitig die bei einem mechanisch betätigten Lasttrennschalter notwendigen Verbindungsleitungen und die Betätigungsmechanik entfallen.

Es sind aber auch beliebige andere Kombinationen denkbar, bspw. ein Antrieb für alle Pluspole oder für zwei Pluspole und einen Minuspol.

Die Schaltungsanordnung 10 sieht die Verwendung mindestens einer Messeinrichtung 22, 24 zum Messen bspw. der Eingangsspannung jedes Generatoranschlusspaares, die auf der Eingangsseite der Schalter 34, 36, 38 und 40 angeschlossen sind, sowie optional den Gleichspannungswandler 20 zur Eigenversorgung des Wechselrichters 16, der auf der Eingangsseite mindestens eines Schalters 34, 36, 38 und 40 angeschlossen ist, vor.

Darüber hinaus wird eine Installationsmesseinrichtung zur Messung des Installationswiderstands nach Erde vorgeschlagen. Bei Wechselrichtern ohne Potentialtrennung zwischen Primär- und Sekundärseite ist üblicherweise eine Isolationsmessung, also eine Bestimmung des Isolationswiderstandes des Generators nach Erde, vorgeschrieben. Eine dazu notwendige Isolationsmesseinrichtung verfügt typischerweise über zwei hochohmige Spannungsquellen mit unterschiedlichem Wert, die gegen Erde geschaltet werden können. Bei abwechselndem Schalten kann der Strom gemessen und daraus der generatorseitige Isolationswiderstand über R = (u1 - u2)/(i1 - i2) bestimmt werden. Dabei ist U1 die Höhe der Spannungsquelle 1 und u2 die Höhe der Spannungsquelle 2 sowie i1 der Messwert des Stroms bei zugeschalteter Spannungsquelle 1 und i2 der Messwert des Stroms bei zugeschalteter Spannungsquelle 2.

Während der vorgelagerte Gleichspanungswandler 20 die Steuerelektronik des Wechselrichters 16 mit Strom versorgt, falls dies auch ohne Anliegen einer Netzspannung gewünscht ist, prüfen die Messeinrichtungen 22 und 24, ob sich die gemessene Größe, bspw. Spannung, am jeweiligen Eingang innerhalb des zulässigen Bereichs zwischen Minimalwert und Maximalwert, insbesondere nicht verpolt, befindet. Ist dies der Fall, wird der betreffende Schalter 34, 36, 38 bzw. 40 geschlossen und anschließend eine Isolationsmessung durchgeführt.

Durch einen anschließenden Belastungstest kann darüber hinaus festgestellt werden, ob der Generator korrekt angeschlossen wurde. Verändern sich bei einem Belastungstest die Spannungen unzulässig, so wird der Schalter 34, 36, 38 bzw. 40 wieder geöffnet. Auf diese Weise kann sowohl eine ordnungsgemäße Installation überprüft werden als auch im Fehlerfall ein Zuschalten und damit das Auslösen des netzseitigen Leistungsschutzschalters im Schaltschrank verhindert werden. Somit ist es weiterhin möglich, falsch angeschlossene Strings 12, 14 zu detektieren und wegzuschalten sowie eine Beaufschlagung des Wechselrichters 16 mit einer gefährlichen Spannung von Anfang an zu verhindern.

Es wird weiterhin ein von einem Servicetechniker bedienbarer Schalter beschrieben. Dieser Schalter veranlasst nach Einstellen der Trennstellung die Trennung der Generatoren vom Wechselrichter durch die Lasttrennschalter und signalisiert nach Einstellen der Betriebsstellung dem Wechselrichter 16 einen Betriebswunsch. Im Falle des Betriebswunsches wird, im Gegensatz zu bekannten Lösungen, nicht unmittelbar der Generator zugeschaltet, sondern erst nachdem der Generator auf korrekte Installation bzw. Funktion überprüft wurde.

Sollte ein Erdschluss bzw. Instalationsfehler auftreten, ist es nunmehr möglich, durch selektives Betätigen, in diesem Fall Abschalten, der Schalter 34, 36, 28, 40 herauszufinden, in welchem String 12, 14 der Fehler aufgetreten ist. Dieser String 12 bzw. 14 kann mit dieser Information freigeschaltet werden, wobei ein Weiterbetrieb des Wechselrichters 16 mit den verbleibenden Strings 12 bzw. 14 ggf. möglich ist. Auch bei zu großen Leistungen und Spannungen des Generators, welche von der Regelung des Wechselrichters 16 nicht mehr kontrolliert werden können, wird der Generator abgeschaltet.

Werden bei einem Netzfehler auch die DC-Relais geöffnet, so können diese die Funktion der redundanten Abschalteinrichtung übernehmen, was ein Verzicht auf eine redundante Ausführung des Netz-Trennrelais ermöglicht. Muss die Eingangsleistung gedrosselt werden, kann ein Abwurf nicht benötigter Strings 12, 14 erfolgen, um die Arbeitsspannung des Wechselrichters 16 besser kontrollieren zu können.

Sollte im Betrieb des Wechselrichters 16 ein sicherheitsrelevanter Fehler auftreten, so kann die Eingangsleistung durch Lastabwurf der Schalter 34, 36, 38 und 40 vom Wechselrichter 16 weggeschaltet werden, ohne dass kurzschließende Maßnahmen oder ein Warten auf natürliche Leistungsabschaltung, bspw. bei Sonnenuntergang, notwendig sind.

Da darüber hinaus die DC-Relais erst geschlossen werden, wenn eine ausreichend hohe Eingangsspannung vorliegt, wird der Leistungsteil nachts von den PV-Generatoren getrennt. Dies stellt gleichzeitig einen Überspannungsschutz dar, da die Überspannungen, die z. B. bei einem Blitzstrom in der Nähe der Anlage auftreten können, durch die geöffneten Eingangsschalter nicht mit dem Leistungsteil des Wechselrichters 16 verbunden sind.

## Patentansprüche

1. Schaltungsanordnung (10) mit einem Wechselrichter (16), der mit mindestens einem String (12, 14), der einen Pluspol und einen Minuspol aufweist, verbunden ist, wobei unter einem String (12, 14) ein Teilgenerator bzw. eine Modulkette eines Solarmoduls zu verstehen ist, wobei in wenigstens einem von dem mindestens einen String (12, 14) eine Messeinrichtung (22, 24) und ein steuerbarer Schalter (34, 36, 38, 40) vorgesehen sind, wobei der wenigstens eine steuerbare Schalter (34, 36, 38, 40) durch den Wechselrichter (16) anzusteuern ist, wobei jedem Pol des Wechselrichters (16) ein Schalter (34, 36, 38, 40) zugeordnet ist,
**dadurch gekennzeichnet, dass**
der Pluspol des Strings (12) über einen ersten Schalter (34) mit einem ersten Pol des Wechselrichters (16) und der Minuspol des Strings (12) über einen zweiten Schalter (36) mit einem zweiten Pol des Wechselrichters (16) verbunden ist.

2. Schaltungsanordnung nach Anspruch 1, bei dem der Wechselrichter (16) mit einem weiteren String (14) verbunden ist, der einen Pluspol und einen Minuspol aufweist, wobei der Pluspol des weiteren Strings (14) über einen dritten Schalter (38) mit einem dritten Pol des Wechselrichters (16) und der Minuspol des weiteren Strings (14) über einen vierten Schalter (40) mit einem vierten Pol des Wechselrichters (16) verbunden ist.

3. Schaltungsanordnung nach Anspruch 1 oder 2, bei der zusätzlich ein externer Trennschalter (18) für Wartungsarbeiten vorgesehen ist.

4. Schaltungsanordnung nach einem der vorangegangenen Ansprüche, bei der ein Gleichspannungswandler (20) vorgesehen ist.

5. Schaltungsanordnung nach einem der vorangegangenen Ansprüche, bei der der Wechselrichter (16) als Photovoltaik-Wechselrichter ausgebildet ist.

6. Schaltungsanordnung nach einem der vorangegangenen Ansprüche, bei der die wenigstens eine Messeinrichtung (22, 24) als Voltmeter ausgebildet ist.

7. Verfahren zum Betreiben einer Schaltungsanordnung (10), die einen Wechselrichter (16) umfasst, der mit mindestens einem String (12, 14), der einen Pluspol und einen Minuspol aufweist, verbunden ist, wobei unter einem String (12, 14) ein Teilgenerator bzw. eine Modulkette eines Solarmoduls zu verstehen ist, wobei in wenigstens einem von dem mindestens einen String (12, 14) eine Messeinrichtung (22, 24) und ein steuerbarer Schalter (34, 36, 38, 40) vorgesehen sind, wobei jedem Pol des Wechselrichters (16) ein Schalter (34, 36, 38, 40) zugeordnet ist, wobei der Pluspol des Strings (12) über einen ersten Schalter (34) mit einem ersten Pol des Wechselrichters (16) und der Minuspol des Strings (12) über einen zweiten Schalter (36) mit einem zweiten Pol des Wechselrichters (16) verbunden ist,
**dadurch gekennzeichnet, dass**
der wenigstens eine steuerbare Schalter (34, 36, 38, 40) durch den Wechselrichter (16) angesteuert wird.

8. Verfahren nach Anspruch 7, bei dem der wenigstens eine Schalter (34, 36, 38, 40) geschlossen wird, nachdem festgestellt wurde, dass gemessene Größen in einem zulässigen Bereich liegen.

9. Verfahren nach Anspruch 8 oder 9, bei dem zusätzlich eine Isolationsmessung durchgeführt wird.

10. Verfahren nach einem der Ansprüche 8 bis 9, bei dem mehrere Schalter (34, 36, 38, 40) vorgesehen sind, die selektiv betätigt werden.

## Claims

1. Circuit arrangement (10) comprising an inverter (16) connected to at least one string (12, 14) with a positive pole and a negative pole, wherein a string (12, 14) is to be understood as a partial generator or a module chain of a solar module, wherein at least one of the at least one string (12, 14) comprises a measuring device (22, 24) and a controllable switch (34, 36, 38, 40) provided in it, wherein the at least one controllable switch (34, 36, 38, 40) can be actuated by the inverter (16), each pole of the inverter (16) being associated to a switch (34, 36, 38, 40),
**characterized in that** the positive pole of the string (12) is connected to a first pole of the inverter (16) via a first switch (34) and the negative pole of the string (12) is connected to a second pole of the inverter (16) via a second switch (36).

2. Circuit arrangement according to Claim 1, in which the inverter (16) is connected to a further string (14) with a positive pole and a negative pole, wherein the positive pole of the further string (14) is connected to a third pole of the inverter (16) via a third switch (38) and the negative pole of the further string (14) is connected to a fourth pole of the inverter (16) via a fourth switch (40).

3. Circuit arrangement according to Claim 1 or 2, in which additionally an external isolator switch (18) is provided for maintenance purposes.

4. Circuit arrangement according to one of the preceding claims, in which a DC converter (20) is provided.

5. Circuit arrangement according to one of the preceding claims, in which the inverter (16) is provided as a photovoltaic inverter.

6. Circuit arrangement according to one of the preceding claims, in which the at least one measuring device (22, 24) is provided as a voltmeter.

7. Method for operating a circuit arrangement (10) comprising an inverter (16) connected to at least one string (12, 14) with a positive pole and a negative pole, wherein a string (12, 14) is to be understood as a partial generator or a module chain of a solar module, wherein at least one of the at least one string (12, 14) comprises a measuring device (22, 24) and a controllable switch (34, 36, 38, 40) provided in it, wherein each pole of the inverter (16) is associated to a switch (34, 36, 38, 40), wherein the positive pole of the string (12) is connected to a first pole of the inverter (16) via a first switch (34) and the negative pole of the string (12) is connected to a second pole of the inverter (16) via a second switch (36),
**characterized in that** the at least one controllable switch (34, 36, 38, 40) is actuated by the inverter (16) .

8. Method according to Claim 7, in which the at least one switch (34, 36, 38, 40) is closed after it has been established that measured variables are in a permissible range.

9. Method according to Claim 8 or 9, in which an insulation measurement is additionally performed.

10. Method according to either of Claims 8 and 9, in which multiple switches (34, 36, 38, 40) are provided that are operated selectively.

## Revendications

1. Circuiterie (10) comprenant un onduleur (16) qui est relié à au moins une chaîne (12, 14) comportant un pôle positif et un pôle négatif, dans laquelle une chaîne (12, 14) est définie comme étant un générateur partiel ou une chaîne de modules d'un module solaire, dans laquelle il est prévu un dispositif de mesure (22, 24) et un commutateur commandable (34, 36, 38, 40) dans au moins l'une de ladite au moins une chaîne (12, 14), dans laquelle ledit au moins un commutateur commandable (34, 36, 38, 40) doit être commandé par l'onduleur (16), dans laquelle un commutateur (34, 36, 38, 40) est associé à chaque pôle de l'onduleur (16),
**caractérisée en ce que** le pôle positif de la chaîne (12) est relié par l'intermédiaire d'un premier commutateur (34) à un premier pôle de l'onduleur (16) et **en ce que** le pôle négatif de la chaîne (12) est relié par l'intermédiaire d'un deuxième commutateur (36) à un deuxième pôle de l'onduleur (16).

2. Circuiterie selon la revendication 1, dans laquelle l'onduleur (16) est relié à une autre chaîne (14) qui comporte un pôle positif et un pôle négatif, dans laquelle le pôle positif de l'autre chaîne (14) est relié par l'intermédiaire d'un troisième commutateur (38) à un troisième pôle de l'onduleur (16) et le pôle négatif de l'autre chaîne (14) est relié à un quatrième pôle de l'onduleur (16) par l'intermédiaire d'un quatrième commutateur (40).

3. Circuiterie selon la revendication 1 ou 2, dans laquelle il est en outre prévu un sectionneur externe (18) pour les travaux de maintenance.

4. Circuiterie selon l'une des revendications précédentes, dans laquelle il est prévu un convertisseur de tension continue (20).

5. Circuiterie selon l'une des revendications précédentes, dans laquelle l'onduleur (16) est réalisé sous la forme d'un onduleur photovoltaïque.

6. Circuiterie selon l'une des revendications précédentes, dans laquelle l'au moins un dispositif de mesure (22, 24) est réalisé sous la forme d'un voltmètre.

7. Procédé de fonctionnement d'une circuiterie (10) comprenant un onduleur (16) qui est relié à au moins une chaîne (12, 14) comportant un pôle positif et un pôle négatif, dans lequel une chaîne (12, 14) est définie comme étant un générateur partiel ou une chaîne de modules d'un module solaire, dans lequel il est prévu un dispositif de mesure (22, 24) et un commutateur commandable (34, 36, 38, 40) dans au moins l'une de ladite au moins une chaîne (12, 14), dans lequel un commutateur (34, 36, 38, 40) est associé à chaque pôle de l'onduleur (16), dans lequel le pôle positif de la chaîne (12) est relié par l'intermédiaire d'un premier commutateur (34) à un premier pôle de l'onduleur (16) et le pôle négatif de la chaîne (12) est relié par l'intermédiaire d'un deuxième commutateur (36) à un deuxième pôle de l'onduleur (16),
**caractérisé en ce que** ledit au moins un commutateur commandable (34, 36, 38, 40) est commandé par l'onduleur (16).

8. Procédé selon la revendication 7, dans lequel ledit au moins un commutateur (34, 36, 38, 40) est fermé après qu'il a été déterminé que les grandeurs mesurées se situent dans une plage admissible.

9. Procédé selon la revendication 8 ou 9, dans lequel une mesure d'isolation est en outre effectuée.

10. Procédé selon l'une des revendications 8 à 9, dans lequel il est prévu une pluralité de commutateurs (34, 36, 38, 40) qui sont actionnés de manière sélective.
